# EUROPEAN PATENT SPECIFICATION

(11) **EP 2 996 281 B1**
(45) Date of publication and mention of the grant of the patent: **25.04.2018**
(21) Application number: 14770381.3
(22) Date of filing: 14.03.2014
(51) Int. Cl.: H02H 1/00, H04L 12/24, H04J 3/06

(54) **METHOD AND SYSTEM FOR PACKET SYNCHRONIZATION ON PROCESS LAYER NETWORK OF INTELLIGENT SUBSTATION**
VERFAHREN UND SYSTEM FÜR PAKETSYNCHRONISATION IN EINEM PROZESSSCHICHTNETZWERK EINER INTELLIGENTEN UNTERSTATION
PROCÉDÉ ET SYSTÈME DE SYNCHRONISATION DE PAQUET SUR UN RÉSEAU DE COUCHE DE TRAITEMENT D'UNE SOUS-STATION INTELLIGENTE

(30) Priority: 22.03.2013 CN 201310093659
(43) Date of publication of application: 16.03.2016
(73) Proprietor: NR Electric Co., Ltd., Jiangsu 211102 (CN); NR Engineering Co., Ltd, Nanjing, Jiangsu 211102 (CN)
(72) Inventor: YANG, Gui, Nanjing Jiangsu 211102 (CN); LV, Hang, Nanjing Jiangsu 211102 (CN); FENG, Yadong, Nanjing Jiangsu 211102 (CN); LI, Li, Nanjing Jiangsu 211102 (CN); WEN, Jifeng, Nanjing Jiangsu 211102 (CN); WANG, Wenlong, Nanjing Jiangsu 211102 (CN); LIU, Minghui, Nanjing Jiangsu 211102 (CN); ZHOU, Xufeng, Nanjing Jiangsu 211102 (CN)
(74) Representative: Grünecker Patent- und Rechtsanwälte PartG mbB
(86) International application number: PCT/CN2014/073473
(87) International publication number: WO 2014/146554

(56) References cited:
- CN-A- 102 761 445
- CN-A- 103 236 893
- CN-U- 201 608 558
- CHRISTOPH BRUNNER ET AL: "Smarter time sync: Applying the IEEE PC37.238 standard to power system applications", PROTECTIVE RELAY ENGINEERS, 2011 64TH ANNUAL CONFERENCE FOR, IEEE, 11 April 2011 (2011-04-11), pages 91-102, XP031972549, DOI: 10.1109/CPRE.2011.6035608 ISBN: 978-1-4577-0494-9
- MONTGOMERY W A: "TECHNIQUES FOR PACKET VOICE SYNCHRONIZATION", IEEE JOURNAL ON SELECTED AREAS IN COMMUNICATIONS, IEEE SERVICE CENTER, PISCATAWAY, US, vol. SAC-01, no. 6, 1 December 1983 (1983-12-01), pages 1022-1028, XP000563228, ISSN: 0733-8716, DOI: 10.1109/JSAC.1983.1146024
- YONG-HUI YI ET AL: "Research of network transmission of process bus based upon IEC 61850", ADVANCED POWER SYSTEM AUTOMATION AND PROTECTION (APAP), 2011 INTERNATIONAL CONFERENCE ON, IEEE, 16 October 2011 (2011-10-16), pages 1578-1582, XP032162548, DOI: 10.1109/APAP.2011.6180612 ISBN: 978-1-4244-9622-8

## Description

### FIELD OF THE INVENTION

The present invention relates to packet synchronization technologies of intelligent substations, and particularly to a packet synchronization method of an intelligent substation process layer network.

### DESCRIPTION OF RELATED ART

An intelligent substation process layer network consists of a merging unit, an intelligent terminal, a network transmission device, a sampled value (SV) data receiving device and other devices, the SV data receiving device (e.g., a protection or measurement and control apparatus) receives a SV packet from the merging unit, and the SV data receiving device performs data calculation and corresponding actions according to the received SV packet. The SV data receiving device needs to simultaneously receive SV packets sent from multiple merging units, it is required that the SV packets sent by different merging units can implement synchronization at the side of the SV data receiving device, and thus, the merging unit, the network transmission device, the SV data receiving device and the like should be capable of coordinating with implementation of synchronization of the SV packets at the side of the SV data receiving device, so as to ensure correctness of calculation of the SV data receiving device. The network transmission device includes a switch, and the SV data receiving device includes, for example, a protection or measurement and control apparatus.

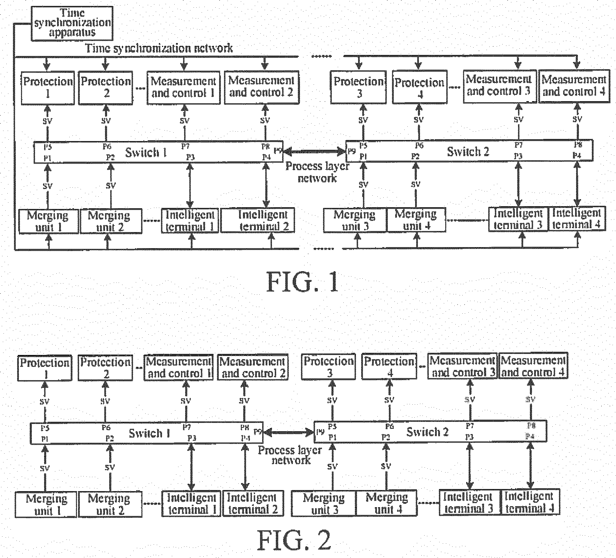

Fig. 1 is a schematic view of the existing process layer networking, as shown in Fig. 1, various settings on the existing process layer network mainly rely on a time synchronization network on packet synchronization, time synchronization is performed on the merging unit, the network transmission device (which may be synchronized or not synchronized according to requirements) and the SV data receiving device (hereinafter a protection or measurement and control apparatus will represent the SV data receiving device for description) on the process layer network via the time synchronization network, and 1 us can be achieved by using IRIG-B code time synchronization precision. However, the method relies too much on reliability of the time synchronization network, and failure of the time synchronization network will result in that the merging unit and the protection or measurement and control apparatus enter a time out-of-step state, the protection or measurement and control apparatus cannot correctly implement synchronization of the SV packets, and result in that data calculation and corresponding actions cannot be performed correctly. As there is a greater deviation in time of various merging units at this point, timestamps carried in the SV packets sent by the merging units at the same moment are not identical, protection calculation performed by the protection or measurement and control apparatus according to the timestamps will lead to incorrect results so as to cause incorrect actions, and this will bring about great potential safety hazards to reliable operation of the whole intelligent substation.

At present, another time synchronization manner adopted by the intelligent substation is an IEC61588 network time synchronization (hereinafter referred to as PTP) manner, to increase time synchronization precision, the manner requires that the network transmission device (e.g., switch) making up the process layer network also needs to have an IEC61588 time synchronization function, a general network transmission device is used as a Transparent Clock (TC) in the network, and the merging unit and the protection or measurement and control apparatus are used as a Slave Clock (SC). As time synchronization packets received by the merging unit and the protection or measurement and control apparatus are sent via a network transmission device, time synchronization precision of the merging unit and the protection or measurement and control apparatus will definitely be affected by PTP algorithm precision, PTP algorithm reliability, clock precision of the network transmission device and packet flow on the network, when the PTP algorithm precision, PTP algorithm reliability or clock precision of the switch cannot be ensured, time synchronization precision of the merging unit and the protection or measurement and control apparatus will decrease, and in bad conditions, a time synchronization error of the merging unit and the protection or measurement and control apparatus will be up to a second level, thereby resulting in that the protection or measurement and control apparatus cannot operate normally. In the event of excess network packet flow, a situation such as loss of a PTP time synchronization packet will occur, which may also result in reduction of time synchronization precision and even failure of time synchronization. The above situations will severely affect correct calculation and actions of protection, which will bring about great potential safety hazards to reliable operation of the whole intelligent substation.

"Smarter time sync: Applying the IEEE PC37.238 standard to power system applications", 64th Annual Conference for Protective Relay Engineers, IEEE, 2011, pages 91-102, by Christoph Brunner et al. relates to time synchronization of electric power systems. A device synchronized to universal time is called a grandmaster clock. Synchronization can be done using grandmaster clock time distributed using Sync messages. Sync messages contain the time on the grandmaster clock at the time of issuance. They are time-stamped before they are transmitted into physical media to avoid variable delay. Path delay measurements of the cables are performed using PDelay messages on each point-to-point link. Residence time of a Sync message in a switch is measured. Measured cable delay time and residence time are distributed in the CorrectionField in the Sync message to the end devices. These delays are added to the received grandmaster time before adjusting the clock at the end device.

"Techniques for Packet Voice Synchronization", IEEE JOURNAL ON SELECTED AREAS IN COMMUNICATIONS, vol. SAC-01, no. 6, 1 December 1983, pages 1022-1028, by Warren A. Montgomery relates to packet voice synchronization and varying transit delays for individual packets. A continuous stream of voice samples is transmitted by the sender, received and reconstructed by the receiver. Reconstruction may be done by choosing a target playout time for each incoming packet as a fixed interval. The delay contains a fixed delay for all packets and a variable delay with different amount for each packet. Production time is included in a packet, while the subsequent packets contain a sequence number representing the relative production time. The approach depends on the clocks in the sender and the receiver being close enough in frequency. Various delay estimation methods are discussed, based on sequence information of subsequent packets, roundtrip measurement of a packet containing the local clock reading of the sender, include a timestamp to indicate a packet's production time to a predetermined significant bit for clock synchronization, or a delay stamp accumulating the delay of network elements. The receiver uses the content of the delay stamp to determine playout time of the packet.

### SUMMARY OF THE INVENTION

### Technical Problem

In view of this, embodiments of the present invention provide a packet synchronization method and system of an intelligent substation process layer network, which can solve the problem that the existing process layer network relies too much on a time synchronization network. This is achieved by the features of the independent claims.

### Technical Solution

The solution of the embodiments of the present invention is as follows:

The embodiments of the present invention provide a packet synchronization method of an intelligent substation process layer network, the method including:
recording transmission delay on a network transmission device in a SV packet sent by a merging unit; and
implementing, by a SV data receiving device, packet synchronization according to the transmission delay on the network transmission device recorded in the SV packet.

Preferably, the recording transmission delay on a network transmission device in a SV packet sent by a merging unit includes:
reserving a time domain field according to configuration when the merging unit sends the SV packet; the time domain field being used to make statistics, by the network transmission device, on the transmission delay and accumulate transmission delay of all levels of network transmission devices to be stored in the time domain field;
recording the transmission delay of the SV packet on the network transmission device into the time domain field of the SV packet by adopting a manner of adding timestamps for the SV packet on input and output ports of the all levels of network transmission devices; and
accumulating the transmission delay of the all levels of network transmission devices in the time domain field when the SV packet is forwarded by the all levels of network transmission devices.

Preferably, the implementing, by a SV data receiving device, packet synchronization according to the transmission delay on the network transmission device recorded in the SV packet includes:
after the SV data receiving device receives the SV packet, restoring sending time of the SV packet based on local time by subtracting a value in the time domain field from the time when the SV data receiving device receives the SV packet, and calculating sampling time according to rated delay of the merging unit; and
performing, by the SV data receiving device, packet synchronization on received SV packets of different merging units based on the sampling time.

Preferably, the transmission delay takes ns as the smallest unit, used to enable the time domain field that the merging unit reserves according to configuration to have enough fields to record transmission delay of all levels of network devices.

Preferably, the method further includes: deciding, by the network transmission device, according to configuration, whether to calculate internal residing time of the network transmission device for a specified packet and modify the time domain field in the SV packet; and
the configuration is based on a combination of one or at least two of a source media access control (MAC) address, a target MAC address, a packet type, a source internet protocol (IP) address, a target IP address, a source port number and a target port number.

Preferably, the method further includes:
after the SV data receiving device receives the SV with the reserved time domain field, judging whether time domain information carried in the SV packet is within a reasonable range, if the time domain information exceeds a limited range, determining the SV packet as an incorrect packet and discarding the SV packet, and if the time domain information does not exceed the limited range, determining the SV packet as a correct packet, performing time recovery on the correct packet and implementing the packet synchronization.

The embodiments of the present invention further provide a packet synchronization system of an intelligent substation process layer network, the system including: a merging unit, a network transmission device and a SV data receiving device; wherein,
the merging unit is configured to send a SV packet to the network transmission device;
the network transmission device is configured to receive the SV packet, record transmission delay on the network transmission device in the SV packet and send the SV packet to the SV data receiving device; and
the SV data receiving device is configured to receive the SV packet, and implement packet synchronization according to the transmission delay on the network transmission device recorded in the SV packet.

Preferably, the merging unit is further configured to reserve a time domain field according to configuration when sending the SV packet; the time domain field being used to make statistics, by the network transmission device, on the transmission delay and accumulate transmission delay of all levels of network transmission devices to be stored in the time domain field; and
the network transmission device is further configured to record the transmission delay of the SV packet on the network transmission device into the time domain field of the SV packet by adopting a manner of adding timestamps for the SV packet on input and output ports of the all levels of network transmission devices, and accumulate the transmission delay of the all levels of network transmission devices in the time domain field when the SV packet is forwarded by the all levels of network transmission devices.

Preferably, the SV data receiving device is further configured to, after receiving the SV packet, restore sending time of the SV packet based on local time by subtracting a value in the time domain field from the time when the SV data receiving device receives the SV packet, and calculate sampling time according to rated delay of the merging unit; and perform packet synchronization on received SV packets of different merging units based on the sampling time.

Preferably, the network transmission device is further configured to decide according to configuration whether to calculate internal residing time of the network transmission device for a specified packet and modify the time domain field in the SV packet; and the configuration is based on a combination of one or at least two of a source MAC address, a target MAC address, a packet type, a source IP address, a target IP address, a source port number and a target port number.

Preferably, the SV data receiving device is further configured to, after receiving the SV with the reserved time domain field, judge whether time domain information carried in the SV packet is within a reasonable range, if the time domain information exceeds a limited range, determine the SV packet as an incorrect packet and discarding the SV packet, and if the time domain information does not exceed the limited range, determine the SV packet as a correct packet, perform time recovery on the correct packet and implement the packet synchronization.

### Advantageous Effect

The method of the embodiments of the present invention includes recording transmission delay on a network transmission device in a SV packet sent by a merging unit; and implementing, by a SV data receiving device, packet synchronization according to the transmission delay on the network transmission device recorded in the SV packet. As transmission delay on a network transmission device is recorded in a SV packet sent, the SV data receiving device implements packet synchronization according to the transmission delay on the network transmission device recorded in the SV packet, which can be done based on a local clock of the SV data receiving device on the basis of not relying on a time synchronization network. Thus, by use of the embodiments of the present invention, synchronization of SV packets sent by various merging units which are received by the SV data receiving device (e.g., protection or measurement and control apparatus) can be implemented on the basis of not relying on a time synchronization network, and the defect that data reliability calculation and action of the SV data receiving device (e.g., protection or measurement and control apparatus) rely too much on the time synchronization network is solved, thereby achieving that the SV data receiving device (e.g., protection or measurement and control apparatus) implements packet synchronization based on a local clock.

### BRIEF DESCRIPTION OF THE DRAWINGS

Fig. 1 is a schematic view of the existing process layer networking; and
Fig. 2 is a schematic view of process layer networking according to an embodiment of the present invention.

### DETAILED DESCRIPTION OF THE INVENTION

The embodiments of the present invention relate to communications between various devices such as a merging unit, a network transmission device (e.g., switch) and a SV data receiving device (e.g., protection, measurement and control apparatus) of an intelligent substation, and the embodiments of the present invention provide a packet synchronization scheme of an intelligent substation process layer network, which implements time synchronization at the side of the SV data receiving device (e.g., protection, measurement and control apparatus) in a manner of recording transmission delay on the network transmission device in a SV packet sent by the merging unit. Various merging units make it possible that SV packets can carry transmission delay of the packets passing through the network transmission device in a manner of adding time domains to the SV packets, and the manner of adding time domains to the SV packets can effectively prevent occurrence of an abnormal situation where addition of additional fields during transmission of the SV packets results in packet loss.

When a SV packet passes through a network transmission device, an input port of the network transmission device is responsible for recording input time (t1) of the packet, and an output port of the network transmission device is responsible for recording output time (t2) of the packet and accumulating the value of (t2-t1) and an original time value in a time domain to obtain the sum of transmission time when the packet is transmitted on all levels of network transmission devices. When receiving the SV packet, the SV data receiving device (e.g., protection, measurement and control apparatus) records the time when the packet arrives at an internet access of the SV data receiving device (e.g., protection, measurement and control apparatus), and subtracts the value in the time domain from the value of the time to write a calculation result in a packet time domain, a sampling time thereof is deduced according to rated delay of the merging unit, and packet synchronization is performed based on the deduced sampling time.

By use of such a packet synchronization method, the problem that the process layer network relies too much on time synchronization precision and reliability of a time synchronization network can be effectively solved, and a problem of packet time synchronization of the process layer network is solved with maximum reliability. Reliability of data calculation and actions of the SV data receiving device (e.g., protection, measurement and control apparatus) is ensured.

During specific implementation, when organizing the SV packet, the merging unit reserves a time domain field and resets the value of the field, used to record, by the network transmission device (such as a switch), transmission delay of the packet in the network transmission device. The network transmission device needs to record a current time (T1) when the packet enters a port, and subtracts T1 from the existing value (T0) in the packet time domain, and a calculation result (TO') is stored in the packet time domain. When the packet is output from another port of the network transmission device, the network transmission device is responsible for recording a time value (T2) of an output time of the packet and adds the existing value (T0') in the packet time domain to the value (i.e., T0'+T2), and a calculation result is stored in the time domain to be sent to next apparatus together with the packet. In this manner, the value finally retained in the time domain is the sum (ΔT) of a difference between the time (T2) when the packet leaves the network transmission device and the time (T1) when the packet enters the network transmission device and an original value (T0) of a reserved field, i.e., ΔT=T2-T1+T0. If the next apparatus is also a network transmission device, the process will be repeated. If the next apparatus is a SV data receiving device (e.g., protection, measurement and control apparatus), the time (T3) when the packet arrives at the SV data receiving device is recorded, and the value (ΔT) in the packet time domain is subtracted from the value to obtain a value (T4) of a sending time of the packet, i.e., T4=T3-ΔT. A sampling time T5 is obtained by subtracting preset merging unit rated delay from T4, and the SV data receiving device synchronizes the value of the T5 time with other SV packets, used for subsequent calculation.

The solution calculates, on a network transmission device, transmission delay of a packet in the network transmission device, and obtains the transmission delay in a manner of recording input time and output time of the packet and calculating a difference, the method is completely implemented by hardware (implemented by FPGA, PHY and the like), a CPU is not required to participate, which solves influences of a switch software algorithm and the like on time synchronization precision when IEC61588 is used, and as it is unnecessary to send and receive IEC61588 packets, network traffic and the like will not affect synchronizing SV packets by the SV data receiving device. The solution also solves the problem that the process layer network relies too much on a time synchronization system.

The technical solution of the embodiments of the present invention is described in detail below in combination with specific examples.

An intelligent substation process layer network mainly consists of merging units, an intelligent terminal, a switch, a protection apparatus, a measurement and control apparatus and the like, the protection apparatus and the measurement and control apparatus both receive SV packets from the merging units, the SV packets need to implement synchronization at the side of the protection apparatus and the measurement and control apparatus.

As shown in Fig. 2, suppose that protection 1 (i.e., protection apparatus 1, the same below) receives SV packets from a merging unit 1, a merging unit 2 and a merging unit 3 and needs to perform packet synchronization. The measurement and control 1 needs to receive SV packets from the merging unit 1, the merging unit 2 and a merging unit 4 and needs to perform packet synchronization.

The process that the merging unit 1 sends a SV packet is as follows:
1. The merging unit 1 first regularly organizes and sends a SV packet to a switch (network transmission device) according to a sending interval, and the merging unit 1 retains a reserved time field (time domain) in the packet and resets the value of the time domain each time it organizes the SV packet. The merging unit 1 sends the SV packet to the switch.
2. A switch 1 receives the SV packet sent from the merging unit 1 at a P1 port, records the value of time when the SV picketer enters the P1 port, subtracts the value of time captured at the P1 port from the value in the time domain of the SV packet, and updates the time domain of the SV packet with a calculation result.
3. The SV packet is sent to the protection 1 via a P5 port and sent to the measurement and control 1 via a P7 port respectively according to an exchange rule of the switch 1. When the SV packet is output from the P5 port, the switch 1 captures the value of time when the SV packet is output from the P5 port, adds the value of the time domain of the SV packet to the value of the time field captured and updates the time domain of the SV packet with a calculation result. Likewise, when the SV packet is output from the P7 port, operations the same as those of P5 are performed.
4. The protection 1 receives the SV packet sent from the switch 1 and records the time when the packet enters the protection apparatus, a time value of a sending time of the SV packet is obtained by subtracting the value of the time domain of the SV packet from the time, its sampling time is deduced according to rated delay of the merging unit, and synchronization and subsequent calculation of the SV packet and other work are performed based on the value. Likewise, the measurement and control 1 receives the SV packet sent from the switch 1 and records the time when the packet enters the measurement and control apparatus, a time value of a sending time of the SV packet is obtained by subtracting the value of the time domain of the SV packet from the time, its sampling time is deduced according to rated delay of the merging unit, and synchronization and subsequent calculation of the SV packet and other work are performed based on the value.

The process that the merging unit 2 sends a packet is the same as the process that the merging unit 1 sends a packet, both of which pass through one switch to reach the corresponding protection apparatus and measurement and control apparatus.

The process that the merging unit 3 sends a packet is as follows:
1. The merging unit 3 first regularly organizes and sends a SV packet to a switch according to a sending interval, and the merging unit 3 retains a reserved time field (time domain) in the packet and resets the value of the time domain each time it organizes the SV packet. The merging unit 3 sends the SV packet to the switch.
2. A switch 2 receives the SV packet sent from the merging unit 3 at a P1 port, records the value of time when the SV picketer enters the P1 port, subtracts the value of time captured at the P1 port from the value in the time domain of the SV packet, and updates the time domain of the SV packet with a calculation result.
3. The SV packet is sent to the switch 1 via a P9 port according to an exchange rule of the switch 2. When the SV packet is output from the P9 port, the switch 2 captures the value of time when the SV packet is output from the P9 port, adds the value of the time domain of the SV packet to the value of the time field captured and updates the time domain of the SV packet with a calculation result.
4. A switch 1 receives the SV packet sent from the switch 2 at the P9 port, records the time when the packet enters the P9 port, subtracts the time value captured at the P9 port value from the value in the time domain of the SV packet, and updates the time domain of the SV packet with a calculation result.
5. The SV packet is sent to the protection 1 via a P5 port and sent to the measurement and control 1 via a P7 port respectively according to an exchange rule of the switch 1. When the SV packet is output from the P5 port, the switch 1 captures the value of time when the SV packet is output from the P5 port, adds the value of the time domain of the SV packet to the value of the time feld captured and updates the time domain of the SV packet with a calculation result. Likewise, when the SV packet is output from the P7 port, operations the same as those of P5 are performed.
6. The protection 1 receives the SV packet sent from the switch 1 and records the time when the packet enters the protection apparatus, a time value of a sending time of the SV packet is obtained by subtracting the value of the time domain of the SV packet from the time, its sampling time is deduced according to rated delay of the merging unit, and synchronization (sorting) and subsequent calculation of the SV packet and other work are performed based on the value. Likewise, the measurement and control 1 receives the SV packet sent from the switch 1 and records the time when the packet enters the measurement and control apparatus, a time value of a sending time of the SV packet is obtained by subtracting the value of the time domain of the SV packet from the time, its sampling time is deduced according to rated delay of the merging unit, and sorting and subsequent calculation of the SV packet and other work are performed based on the value.

The above are merely preferred embodiments of the embodiments of the present invention, and are not intended to limit the protection scope of the embodiments of the present invention.

### Industrial Applicability

According to the embodiments of the present invention, transmission delay on a network transmission device is recorded in a SV packet sent by a merging unit; and a SV data receiving device implements packet synchronization according to the transmission delay on the network transmission device recorded in the SV packet. By use of the embodiments of the present invention, synchronization of SV packets sent by various merging units which are received by the SV data receiving device can be implemented on the basis of not relying on a time synchronization network, and the defect that data reliability calculation and action of the SV data receiving device rely too much on the time synchronization network is solved, thereby achieving that the SV data receiving device implements packet synchronization based on a local clock.

## Claims

1. A packet synchronization method of an intelligent substation process layer network, the method comprising:
recording transmission delay on a network transmission device in a sampled value, SV, packet sent by a merging unit; and
implementing, by a SV data receiving device, packet synchronization according to the transmission delay on the network transmission device recorded in the SV packet, wherein the recording transmission delay on a network transmission device in a SV packet sent by a merging unit is **characterized by** reserving a time domain field in the SV packet according to configuration, wherein the configuration is based on a combination of at least two of a source media access control, MAC, address, a target MAC address, a packet type, a source internet protocol, IP, address, a target IP address, a source port number and a target port number, when the merging unit sends the SV packet; the time domain field being used to make statistics, by the network transmission device, on the transmission delay and accumulate transmission delay of all levels of network transmission devices to be stored in the time domain field;
recording the transmission delay of the SV packet on the network transmission device into the time domain field of the SV packet by adopting a manner of adding timestamps for the SV packet on input and output ports of the all levels of network transmission devices; and
accumulating the transmission delay of the all levels of network transmission devices in the time domain field when the SV packet is forwarded by the all levels of network transmission devices.

2. The method according to claim 1, wherein the implementing, by a SV data receiving device, packet synchronization according to the transmission delay on the network transmission device recorded in the SV packet comprises:
after the SV data receiving device receives the SV packet, restoring sending time of the SV packet based on local time by subtracting a value in the time domain field from the time when the SV data receiving device receives the SV packet, and calculating sampling time according to rated delay of the merging unit; and
performing, by the SV data receiving device, packet synchronization on received SV packets of different merging units based on the sampling time.

3. The method according to claim 1, wherein the transmission delay takes ns as the smallest unit, used to enable the time domain field that the merging unit reserves according to configuration to record transmission delay of all levels of network devices.

4. The method according to any one of claims 1 to 3, wherein the method further comprises: deciding, by the network transmission device, according to configuration, whether to calculate internal residing time of the network transmission device for a specified packet and modify the time domain field in the SV packet.

5. The method according to claim 2, wherein the method further comprises:
after the SV data receiving device receives the SV packet with the reserved time domain field, judging whether time domain information carried in the SV packet is within a limited range, if the time domain information exceeds a limited range, determining the SV packet as an incorrect packet and discarding the SV packet, and if the time domain information does not exceed the limited range, determining the SV packet as a correct packet, performing time recovery on the correct packet and implementing the packet synchronization.

6. A packet synchronization system of an intelligent substation process layer network, the system comprising: a merging unit, a network transmission device and a SV data receiving device; wherein:
the merging unit is configured to send a sampled value, SV, packet to the network transmission device;
the network transmission device is configured to receive the SV packet, record transmission delay on the network transmission device in the SV packet and send the SV packet to the SV data receiving device; and
the SV data receiving device is configured to receive the SV packet, and implement packet synchronization according to the transmission delay on the network transmission device recorded in the SV packet **characterized by** the merging unit is further configured to reserve a time domain field in the SV packet according to configuration, the configuration is based on a combination of at least two of a source media access control, MAC, address, a target MAC address, a packet type, a source internet protocol, IP, address, a target IP address, a source port number and a target port number, when sending the SV packet; the time domain field being used to make statistics, by the network transmission device, on the transmission delay and accumulate transmission delay of all levels of network transmission devices to be stored in the time domain field; and
the network transmission device is further configured to record the transmission delay of the SV packet on the network transmission device into the time domain field of the SV packet by adopting a manner of adding timestamps for the SV packet on input and output ports of the all levels of network transmission devices, and accumulate the transmission delay of the all levels of network transmission devices in the time domain field when the SV packet is forwarded by the all levels of network transmission devices.

7. The system according to claim 6, wherein the SV data receiving device is further configured to, after receiving the SV packet, restore sending time of the SV packet based on local time by subtracting a value in the time domain field from the time when the SV data receiving device receives the SV packet, and calculate sampling time according to rated delay of the merging unit; and perform packet synchronization on received SV packets of different merging units based on the sampling time.

8. The system according to claim 6 or 7, wherein the network transmission device is further configured to decide according to configuration whether to calculate internal residing time of the network transmission device for a specified packet and modify the time domain field in the SV packet.

9. The system according to claim 7, wherein the SV data receiving device is further configured to, after receiving the SV packet with the reserved time domain field, judge whether time domain information carried in the SV packet is within a limited range, if the time domain information exceeds a limited range, determine the SV packet as an incorrect packet and discarding the SV packet, and if the time domain information does not exceed the limited range, determine the SV packet as a correct packet, perform time recovery on the correct packet and implement the packet synchronization.

## Patentansprüche

1. Paketsynchronisations-Verfahren eines Prozessschicht-Netzwerks mit intelligenter Unterstation, wobei das Verfahren umfasst:
Aufzeichnen von Übertragungsverzögerung an einer Netzwerk-Übertragungsvorrichtung in einem von einer Merging-Unit gesendeten SV-Paket (sampled value packet); und
Implementieren von Paketsynchronisation entsprechend der in dem SV-Paket aufgezeichneten Übertragungsverzögerung an der Netzwerk-Übertragungsvorrichtung durch eine SV-Datenempfangsvorrichtung, wobei das Aufzeichnen von Übertragungsverzögerung an einer Netzwerk-Übertragungsvorrichtung in einem durch eine Merging-Unit gesendeten SV-Paket
**gekennzeichnet ist durch**
Reservieren eines Zeitdomänen-Feldes in dem SV-Paket entsprechend einer Konfiguration, wobei die Konfiguration auf einer Kombination von wenigstens zwei Elementen aus einer Herkunfts-MAC-Adresse, einer Ziel-MAC-Adresse, einem Paket-Typ, einer Herkunfts-IP-Adresse, einer Ziel-IP-Adresse, einer Herkunfts-Portnummer und einer Ziel-Portnummer basiert, wenn die Merging-Unit das SV-Paket sendet, und das Zeitdomänen-Feld **durch** die Netzwerk-Übertragungsvorrichtung verwendet wird, um Statistiken über die Übertragungsverzögerung zu erstellen und Übertragungsverzögerung von Netzwerk-Übertragungsvorrichtungen aller Ebenen zu akkumulieren und in dem Zeitdomänen-Feld zu speichern;
Aufzeichnen der Übertragungsverzögerung des SV-Paketes an der Netzwerk-Übertragungsvorrichtung in dem Zeitdomänen-Feld des SV-Paketes **durch** Anwenden einer Methode zum Hinzufügen von Zeitstempeln für das SV-Paket an Eingangs- und Ausgangs-Ports der Netzwerk-Übertragungsvorrichtungen aller Ebenen; und
Akkumulieren der Übertragungsverzögerung der Netzwerk-Übertragungsvorrichtungen aller Ebenen in dem Zeitdomänen-Feld, wenn das SV-Paket **durch** die Netzwerk-Übertragungsvorrichtungen aller Ebenen weitergeleitet wird.

2. Verfahren nach Anspruch 1, wobei das Implementieren von Paketsynchronisation entsprechend der in dem SV-Paket aufgezeichneten Sendeverzögerung an der Netzwerk-Übertragungsvorrichtung durch eine SV-Datenempfangsvorrichtung umfasst:
nach Empfangen des SV-Paketes durch die SV-Datenempfangsvorrichtung Wiederherstellen von Sende-Zeit des SV-Paketes auf Basis lokaler Zeit durch Subtrahieren eines Wertes in dem Zeitdomänen-Feld von der Zeit, zu der die SV-Datenempfangsvorrichtung das SV-Paket empfängt, und Berechnen von Abtast-Zeit entsprechend Nenn-Verzögerung der Merging-Unit; sowie
Durchführen von Paketsynchronisation an empfangenen SV-Paketen verschiedener Merging-Units auf Basis der Abtast-Zeit durch die SV-Datenempfangsvorrichtung.

3. Verfahren nach Anspruch 1, wobei die Übertragungsverzögerung ns als die kleinste Einheit verwendet, die eingesetzt wird, um das Zeitdomänen-Feld freizugeben, das die Merging-Unit entsprechend der Konfiguration zum Aufzeichnen von Sendeverzögerung von Netzwerk-Vorrichtungen aller Ebenen reserviert.

4. Verfahren nach einem der Ansprüche 1 bis 3, wobei das Verfahren des Weiteren umfasst, das durch die Netzwerk-Übertragungsvorrichtung entsprechend der Konfiguration entschieden wird, ob interne Verweilzeit der Netzwerk-Übertragungsvorrichtung für ein vorgegebenes Paket berechnet wird und das Zeitdomänen-Feld in dem SV-Paket modifiziert wird.

5. Verfahren nach Anspruch 2, wobei das Verfahren des Weiteren umfasst, dass:
nach Empfangen des SV-Paketes mit dem reservierten Zeitdomänen-Feld durch die SV-Datenempfangsvorrichtung beurteilt wird, ob in dem SV-Paket transportierte Zeitdomänen-Informationen innerhalb eines begrenzten Bereiches liegen, wenn die Zeitdomänen-Informationen einen begrenzten Bereich überschreiten, das SV-Paket als ein fehlerhaftes Paket bestimmt wird und das SV-Paket verworfen wird, und, wenn die Zeitdomänen-Informationen den begrenzten Bereich nicht überschreiten, das SV-Paket als ein fehlerfreies Paket bestimmt wird, Zeit-Wiederherstellung an dem fehlerfreien Paket durchgeführt wird und die Paketsynchronisation implementiert wird.

6. Paketsynchronisations-System eines Prozessschicht-Netzwerks mit intelligenter Unterstation, wobei das System umfasst:
eine Merging-Einheit, eine Netzwerk-Übertragungsvorrichtung und eine SV-Datenempfangsvorrichtung, wobei:
die Merging-Einheit so konfiguriert ist, dass sie ein SV-Paket (sampled value packet) zu der Netzwerk-Übertragungsvorrichtung sendet;
die Netzwerk-Übertragungsvorrichtung so konfiguriert ist, dass sie das SV-Paket empfängt, Übertragungsverzögerung an der Netzwerk-Übertragungsvorrichtung in dem SV-Paket aufzeichnet und das SV-Paket zu der SV-Datenempfangsvorrichtung sendet; und
die SV-Datenempfangsvorrichtung so konfiguriert ist, dass sie das SV-Paket empfängt und Paketsynchronisation entsprechend der in dem SV-Paket aufgezeichneten Übertragungsverzögerung an der Netzwerk-Übertragungsvorrichtung implementiert, **dadurch gekennzeichnet, dass** die Merging-Unit des Weiteren so konfiguriert ist, dass sie ein Zeitdomänen-Feld in dem SV-Paket entsprechend einer Konfiguration reserviert, wobei die Konfiguration auf einer Kombination von wenigstens zwei Elementen aus einer Herkunfts-MAC-Adresse, einer Ziel-MAC-Adresse, einem Paket-Typ, einer Herkunfts-IP-Adresse, einer Ziel-IP-Adresse, einer Herkunfts-Portnummer und einer Ziel-Portnummer basiert, wenn das SV-Paket gesendet wird, wobei das Zeitdomänen-Feld durch die Netzwerk-Übertragungsvorrichtung verwendet wird, um Statistiken über die Übertragungsverzögerung zu erstellen und Übertragungsverzögerung von Netzwerk-Übertragungsvorrichtungen aller Ebenen zu akkumulieren und in dem Zeitdomänen-Feld zu speichern; und
die Netzwerk-Übertragungsvorrichtung des Weiteren so konfiguriert ist, dass sie die Übertragungsverzögerung des SV-Paketes an der Netzwerk-Übertragungsvorrichtung in dem Zeitdomänen-Feld des SV-Paketes durch Anwenden einer Methode zum Hinzufügen von Zeitstempeln für das SV-Paket an Eingangs- und Ausgangs-Ports der Netzwerk-Übertragungsvorrichtungen aller Ebenen aufzeichnet und die Übertragungsverzögerung der Netzwerk-Übertragungsvorrichtungen aller Ebenen in dem Zeitdomänen-Feld akkumuliert, wenn das SV-Paket durch die Netzwerk-Übertragungsvorrichtungen aller Ebenen weitergeleitet wird.

7. System nach Anspruch 6, wobei die SV-Datenempfangsvorrichtung des Weiteren so konfiguriert ist, dass sie nach Empfangen des SV-Paketes Sende-Zeit des SV-Paketes auf Basis lokaler Zeit durch Subtrahieren eines Wertes in dem Zeitdomänen-Feld von der Zeit, zu der die SV-Datenempfangsvorrichtung das SV-Paket empfängt, wiederherstellt und Abtast-Zeit entsprechend Nenn-Verzögerung der Merging-Unit berechnet und Paketsynchronisation an empfangenen SV-Paketen verschiedener Merging-Units auf Basis der Abtast-Zeit durchführt.

8. System nach Anspruch 6 oder 7, wobei die Netzwerk-Übertragungsvorrichtung des Weiteren so konfiguriert ist, dass sie entsprechend der Konfiguration entscheidet, ob interne Verweilzeit der Netzwerk-Übertragungsvorrichtung für ein vorgegebenes Paket berechnet wird und das Zeitdomänen-Feld in dem SV-Paket modifiziert wird.

9. System nach Anspruch 7, wobei die SV-Datenempfangsvorrichtung des Weiteren so konfiguriert ist, dass sie nach Empfangen des SV-Paketes mit dem reservierten Zeitdomänen-Feld beurteilt, ob in dem SV-Paket transportierte Zeitdomänen-Informationen innerhalb eines begrenzten Bereiches liegen, wenn die Zeitdomänen-Informationen einen begrenzten Bereich überschreiten, das SV-Paket als ein fehlerhaftes Paket bestimmt und das SV-Paket verwirft, und, wenn die Zeitdomänen-Informationen den begrenzten Bereich nicht überschreiten, das SV-Paket als ein fehlerfreies Paket bestimmt, Zeit-Wiederherstellung an dem fehlerfreien Paket durchführt und die Paketsynchronisation implementiert.

## Revendications

1. Procédé de synchronisation de paquets d'un réseau de couche de traitement de sous-station intelligent, le procédé comprenant :
enregistrement d'un délai de transmission sur un dispositif de transmission réseau dans un paquet de valeurs échantillonnées, SV (Sampled Value), envoyé par une unité de fusion ; et
mise en oeuvre, par un dispositif de réception de données SV, d'une synchronisation de paquets selon le délai de transmission sur le dispositif de transmission réseau enregistré dans le paquet SV, dans lequel, l'enregistrement du délai de transmission sur un dispositif de transmission réseau dans un paquet SV envoyé par une unité de fusion est
**caractérisé par**
réservation d'un champ de domaine temporel dans le paquet SV selon une configuration, dans lequel la configuration repose sur une combinaison d'au moins deux d'une adresse de contrôle d'accès de support, MAC (Media Access Control), source, une adresse MAC cible, un type de paquet, une adresse de protocole Internet, IP (Internet Protocol), source, une adresse IP cible, un numéro de port source et un numéro de port cible, lorsque l'unité de fusion envoie le paquet SV ; le champ de domaine temporel étant utilisé pour produire des statistiques, par le dispositif de transmission réseau, sur le délai de transmission et accumuler un délai de transmission de tous niveaux de dispositifs de transmission réseau à stocker dans le champ de domaine temporel ;
enregistrement du délai de transmission du paquet SV sur le dispositif de transmission réseau dans le champ de domaine temporel du paquet SV en adoptant un mode d'ajout d'horodateurs pour le paquet SV sur des ports d'entrée et de sortie des tous niveaux de dispositifs de transmission réseau ; et
accumulation du délai de transmission des tous niveaux de dispositifs de transmission réseau dans le champ de domaine temporel lorsque le paquet SV est transmis par les tous niveaux de dispositifs de transmission réseau.

2. Le procédé selon la revendication 1, dans lequel la mise en oeuvre, par un dispositif de réception de données SV, d'une synchronisation de paquets selon le délai de transmission sur le dispositif de transmission réseau enregistré dans le paquet SV comprend :
après que le dispositif de réception de données SV reçoit le paquet SV, restauration d'une durée d'envoi du paquet SV en fonction d'une heure locale en soustrayant une valeur dans le champ de domaine temporel à l'heure à laquelle le dispositif de réception de données SV reçoit le paquet, et calcul d'une durée d'échantillonnage selon un délai nominal de l'unité de fusion ; et
application, par le dispositif de réception de données SV, d'une synchronisation de paquets à des paquets SV reçus de différentes unités de fusion en fonction du temps d'échantillonnage.

3. Le procédé selon la revendication 1, dans lequel le délai de transmission utilise un ns en tant que plus petite unité, utilisé pour permettre au champ de domaine temporel que l'unité de fusion réserve selon une configuration pour enregistrer un délai de transmission de tous niveaux de dispositifs réseau.

4. Le procédé selon l'une quelconque des revendications 1 à 3, dans lequel le procédé comprend en outre : décision ou non, par le dispositif de transmission réseau, selon une configuration, de calculer une durée de station interne du dispositif de transmission réseau pour un paquet spécifié et de modifier le champ de domaine temporel dans le paquet SV.

5. Le procédé selon la revendication 2, dans lequel le procédé comprend en outre :
après que le dispositif de réception de données SV reçoit le paquet SV avec le champ de domaine temporel réservé, estimation de l'inscription ou non d'informations de domaine temporel véhiculées dans le paquet SV dans une plage restreinte, si les informations de domaine temporel dépasse une plage restreinte, détermination du paquet SV en tant qu'un paquet incorrect et élimination du paquet SV, et si les informations de domaine temporel ne dépassent pas la plage restreinte, détermination du paquet SV en tant qu'un paquet correct, application d'une récupération temporelle au paquet correct et mise en oeuvre de la synchronisation de paquets.

6. Système de synchronisation de paquets d'un réseau de couche de traitement de sous-station intelligent, le système comprenant : une unité de fusion, un dispositif de transmission réseau et un dispositif de réception de données SV ; dans lequel :
l'unité de fusion est configurée pour envoyer un paquet de valeurs échantillonnées, SV, au dispositif de transmission réseau ;
le dispositif de transmission réseau est configuré pour recevoir le paquet SV, enregistrer un délai de transmission sur le dispositif de transmission réseau dans le paquet SV et envoyer le paquet SV au dispositif de réception de données SV ; et
le dispositif de réception de données SV est configuré pour recevoir le paquet SV, et mettre en oeuvre une synchronisation de paquets selon le délai de transmission sur le dispositif de transmission réseau enregistré dans le paquet SV **caractérisé par**
l'unité de fusion est configurée en outre pour réserver un champ de domaine temporel dans le paquet SV selon une configuration, la configuration repose sur une combinaison d'au moins deux d'une adresse de contrôle d'accès de support, MAC, source, une adresse MAC cible, un type de paquet, une adresse de protocole Internet, IP, source, une adresse IP cible, un numéro de port source et un numéro de port cible, lors de l'envoi du paquet SV ; le champ de domaine temporel étant utilisé pour produire des statistiques, par le dispositif de transmission réseau, sur le délai de transmission et accumuler un délai de transmission de tous niveaux de dispositifs de transmission réseau à stocker dans le champ de domaine temporel ; et
le dispositif de transmission réseau est configuré en outre pour enregistrer le délai de transmission du paquet SV sur le dispositif de transmission réseau dans le champ de domaine temporel du paquet SV en adoptant un mode d'ajout d'horodateurs pour le paquet SV sur des ports d'entrée et de sortie des tous niveaux de dispositifs de transmission réseau, et accumuler le délai de transmission des tous niveaux des dispositifs de transmission réseau dans le champ de domaine temporel lorsque le paquet SV est transmis par les tous niveaux de dispositifs de transmission réseau.

7. Le système selon la revendication 6, dans lequel le dispositif de réception de données SV est configuré en outre pour, après réception du paquet SV, restaurer une durée d'envoi du paquet SV en fonction d'une heure locale en soustrayant une valeur dans le champ de domaine temporel à l'heure à laquelle le dispositif de réception de données SV reçoit le paquet SV, et calculer une durée d'échantillonnage selon un délai nominal de l'unité de fusion ; et appliquer une synchronisation de paquets à des paquets SV reçus de différentes unités de fusion en fonction du temps d'échantillonnage.

8. Le système selon la revendication 6 ou 7, dans lequel le dispositif de transmission réseau est configuré en outre pour décider ou non selon une configuration de calculer une durée de station interne du dispositif de transmission réseau pour un paquet spécifié et de modifier le champ de domaine temporel dans le paquet SV.

9. Le système selon la revendication 7, dans lequel le dispositif de réception de données SV est configuré en outre, après réception du paquet SV avec le champ de domaine temporel réservé, pour estimer l'inscription ou non d'informations de domaine temporel véhiculées dans le paquet SV dans une plage restreinte, si les informations de domaine temporel dépassent une plage restreinte, déterminer le paquet SV en tant qu'un paquet incorrect et éliminer le paquet SV, et si les informations de domaine temporel ne dépassent pas la plage restreinte, déterminer le paquet SV en tant qu'un paquet correct, appliquer une récupération temporelle au paquet correct et mettre en oeuvre la synchronisation de paquets.
